(19) Europäisches Patentamt
European Patent Office
Office européen des brevets

(11) **EP 4 492 811 A1**

(12) **EUROPEAN PATENT APPLICATION**
published in accordance with Art. 153(4) EPC

(43) Date of publication:
**15.01.2025 Bulletin 2025/03**

(21) Application number: **23766524.5**

(22) Date of filing: **20.02.2023**

(51) International Patent Classification (IPC):
*H04N 25/77* (2023.01)    *G01S 17/894* (2020.01)

(52) Cooperative Patent Classification (CPC):
**G01S 17/894; H04N 25/77**

(86) International application number:
**PCT/JP2023/006026**

(87) International publication number:
**WO 2023/171345 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.03.2022 JP 2022038375**

(71) Applicant: **KOITO MANUFACTURING CO., LTD.**
**Minato-ku, Tokyo, 108-8711 (JP)**

(72) Inventors:
• **SUZUKI, Masatoshi**
**Shizuoka-shi, Shizuoka 424-8764 (JP)**
• **ITABA, Koji**
**Shizuoka-shi, Shizuoka 424-8764 (JP)**
• **KONDO, Keita**
**Shizuoka-shi, Shizuoka 424-8764 (JP)**

(74) Representative: **Grünecker Patent- und
Rechtsanwälte
PartG mbB
Leopoldstraße 4
80802 München (DE)**

(54) **PHOTOELECTRIC CONVERSION CIRCUIT, AND PHOTOELECTRIC CONVERSION DEVICE**

(57)    A photoelectric conversion circuit (22) according to the present disclosure is provided with: a photodetector (D1) that outputs, to a prescribed wiring, an electrical charge according to light exposure; an output circuit (50) that, upon input thereto of an instruction signal, outputs, to the prescribed wiring, an electrical charge corresponding to a period during which the instruction signal is inputted; a plurality of electrical charge accumulation parts (CS1-CS4); and a transfer circuit (60) that transfers electrical charge outputted to the prescribed wiring to the plurality of electrical charge accumulation parts (CS1-CS4).

FIG.2

**EP 4 492 811 A1**

**Description**

TECHNICAL FIELD

The present disclosure relates to a photoelectric conversion circuit and a photoelectric conversion device.

BACKGROUND ART

For example, as an indirect Time of Flight (ToF) type measuring device, a measuring device equipped with an imaging sensor that converts light into an electrical signal is known. In addition, Patent Document 1 discloses a measuring device having a multi-tap configuration in which a plurality of charge storage units are provided, and electric charges are distributed and stored in each of the charge storage units.

CITATION LIST

PATENT LITERATURE

Patent Document 1: JP2021-25833A

SUMMARY OF INVENTION

TECHNICAL PROBLEM

In the case of a multi-tap, variations may occur in distribution characteristics between taps. In the related art, dedicated equipment such as a brightness box is required to correct such variations between taps. For this reason, the timing and environment for correcting the variations are limited.

An object of the present disclosure is to correct variations without using dedicated equipment.

SOLUTION TO PROBLEM

In order to achieve the above-described object, one aspect of the disclosure is a photoelectric conversion circuit including a light receiving element that outputs charges corresponding to an amount of exposure to a predetermined wiring line, an output circuit that, when an instruction signal is input, outputs charges corresponding to a period during which the instruction signal is input to the predetermined wiring line, a plurality of charge storage units, and a transfer circuit that transfers the charges output to the predetermined wiring line to each of the plurality of charge storage units.

ADVANTAGEOUS EFFECTS OF INVENTION

According to the present disclosure, it is possible to correct variations without using dedicated equipment.

BRIEF DESCRIPTION OF DRAWINGS

FIG. 1 is a diagram showing a configuration of a measurement device 1.

FIG. 2 is a diagram showing a configuration of an imaging sensor 22 according to the present embodiment.

FIG. 3 is a flow diagram showing calibration.

FIG. 4 is a diagram showing a modification example of an output circuit.

FIG. 5 is a diagram showing a comparative example of correction of variations between taps.

FIG. 6 is a diagram showing a light emission timing and an exposure timing.

FIG. 7 is a diagram showing creation of a distance image by indirect ToF.

FIG. 8 is a diagram showing a relationship between light emission and exposure in the case of four taps.

DESCRIPTION OF EMBODIMENTS

Hereinafter, an embodiment for implementing the present disclosure will be described with reference to the drawings. In the following description, the same or similar components may be denoted by common reference numerals, and repeated descriptions may be omitted.

(Embodiment)

<<Overview of Measuring Device>>

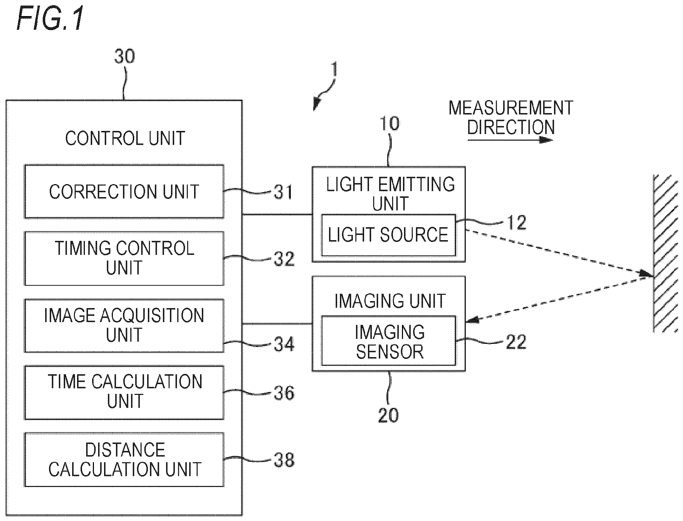

FIG. 1 is a diagram showing a configuration of a measuring device 1.

The measuring device 1 shown in FIG. 1 is a Time of Flight (ToF) type device that measures a distance to an object in front. In the present embodiment, an indirect ToF type camera (hereinafter referred to as a ToF camera) is used. Such a measuring device 1 can eliminate the effects of fog and rain and can perform imaging and measurement even in bad weather. The measuring device 1 is provided, for example, in a vehicle.

As shown in FIG. 1, the measuring device 1 includes a light emitting unit 10, an imaging unit 20, and a control unit 30. In the present embodiment, the measuring device 1 corresponds to a "photoelectric conversion device".

The light emitting unit 10 can emit (project) light into a space to be imaged (measurement area). The light emitting unit 10 is controlled such that it emits light in response to instructions from the control unit 30. The light emitting unit 10 includes a light source 12 and a projection optical system (not shown) that emits light generated by the light source 12.

The light source 12 is a light source including a light emitting element (not shown). The light source 12 emits pulse-like laser light under the control of the control unit 30. Hereinafter, this pulse-like light (pulsed light) is also referred to as a light emitting pulse. The light source 12 will be described in detail later.

The imaging unit 20 (ToF camera) performs imaging on the basis of exposure of light reflected by an object for distance measurement. The imaging unit 20 includes an imaging sensor 22 and an exposure optical system (lens, and the like: not shown) that guides incident (exposed) light to the imaging sensor 22. The imaging sensor 22 will be described in detail later.

In the present embodiment, the light emission of the light emitting unit 10 and the exposure operation of the imaging unit 20 are controlled by the control unit 30, but the disclosure is not limited thereto. For example, the light emitting unit 10 and the imaging unit 20 may be provided with a timing control unit 32, which will be described later, so that light emission and exposure operations can be performed without going through the control unit 30.

The control unit 30 controls the measuring device 1. The control unit 30 is realized by a hardware configuration such as elements and circuits such as a memory and a CPU. The control unit 30 realizes a predetermined function by causing the CPU to execute a program stored in the memory. The control unit 30 is not limited to being realized by software processing execution by the memory and the CPU. For example, the control unit 30 may be realized by hardware such as an ASIC and an FPGA. FIG. 1 shows various functions realized by the control unit 30. The control unit 30 includes a correction unit 31, a timing control unit 32, an image acquisition unit 34, a time calculation unit 36, and a distance calculation unit 38.

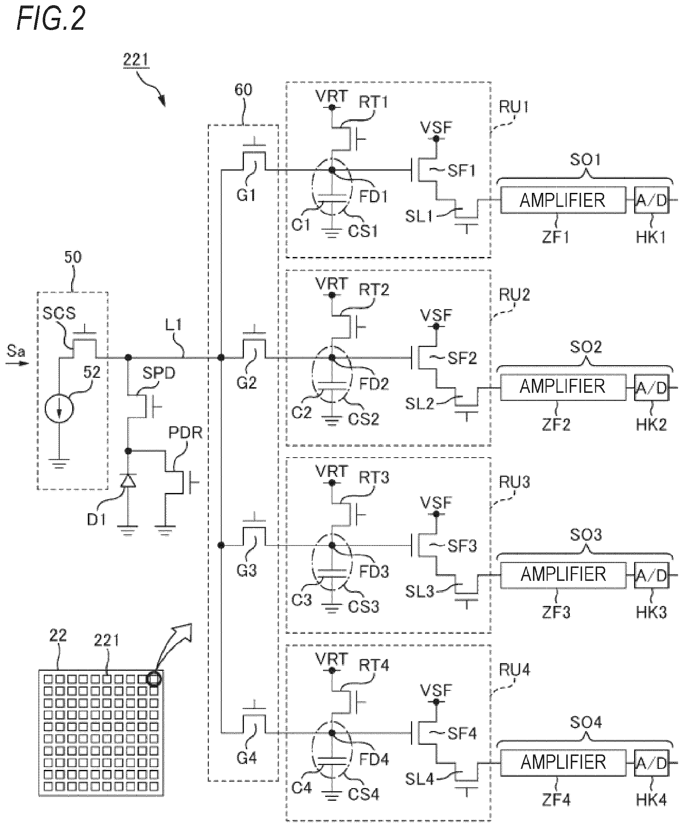

The correction unit 31 controls the imaging sensor 22 of the imaging unit 20 to execute calibration and correct variations between taps of the imaging sensor 22. In the present embodiment, the tap corresponds to a "charge storage unit". The correction unit 31 also transmits a signal Sa (see FIG. 2) for instructing the imaging sensor 22 to execute and stop calibration, as will be described later. The calibration processing performed by the correction unit 31 will be described later.

The timing control unit 32 controls the light emission timing of the light emitting unit 10 and the exposure timing of the imaging unit 20. The light emission timing and the exposure timing will be described later.

The image acquisition unit 34 acquires image data from the imaging sensor 22 of the imaging unit 20. The image acquisition unit 34 also includes a memory (not shown) that stores the acquired image data.

The time calculation unit 36 calculates an arrival time from when the light source 12 of the light emitting unit 10 emits light to when reflected light reaches the imaging sensor 22 of the imaging unit 20, that is, a flight time of light: ToF.

The distance calculation unit 38 calculates a distance on the basis of the exposure result of the imaging sensor 22 and the arrival time of light. As will be described below, a distance image can be acquired by calculating a distance for each pixel.

<Imaging sensor 22>

FIG. 2 is a diagram showing a configuration of the imaging sensor 22 in the present embodiment.

The imaging sensor 22 captures an image of an imaging target in response to an instruction from the control unit 30, and outputs image data obtained by capturing the image to the image acquisition unit 34 of the control unit 30. The value of each pixel (pixel data) that constitutes the image data indicates a signal value corresponding to the amount of exposure.

As shown in FIG. 2, the imaging sensor 22 has a plurality of pixels 221 disposed two-dimensionally (for example, 640 × 480). Each of the pixels 221 includes a light receiving element D1, a transistor SPD, a transistor PDR, an output circuit 50, a transfer circuit 60, signal readout units RU1 to RU4, and signal conversion units SO1 to SO4. In the present embodiment, the imaging sensor 22 (pixel 221) corresponds to a "photoelectric conversion circuit". In addition, each transistor used in the imaging sensor 22 is, for example, an N-type MOSFET, and the turn-on/turn-off of each transistor is controlled by the control unit 30.

The light receiving element D1 is an element (such as a photodiode) that generates charges corresponding to the amount of exposure. In addition, the light receiving element D1 outputs the generated charges to a wiring line L1 via the transistor SPD. The wiring line L1 corresponds to a "prescribed wiring line".

The transistor SPD has the function of a switch that switches between connection and disconnection between the light receiving element D1 and the wiring line L1, and is provided between the wiring line L1 and the light receiving element D1. The transistor SPD corresponds to a "second switch".

The transistor PDR is an element that discharges charges of the light receiving element D1, and is connected in parallel to the light receiving element D1. The transistor PDR corresponds to a "third switch".

The output circuit 50 is a circuit that outputs charges to the wiring line L1 in accordance with a period during which a signal Sa (in this example, an H-level signal Sa) for instructing the execution of calibration is input from the control unit 30 (more specifically, the correction unit 31).

The output circuit 50 in the present embodiment includes a current source 52 that generates a predetermined constant current, and a transistor SCS.

The transistor SCS is provided between the current source 52 and the wiring line L1, and functions as a switch that is turned on or off on the basis of the level of the signal Sa. Specifically, the transistor SCS is turned on when the signal Sa is at an H level. When the transistor SCS is turned on, charges generated by the current source 52 are output to the wiring line L1. In addition, the transistor SCS is turned off when the signal Sa is at an L level. When the transistor SCS is turned off, the current source 52 is disconnected from the wiring line L1. That is, charges generated by the current source 52 are no longer output to the wiring line L1. The transistor SCS corresponds to a "first switch".

Further, in the present embodiment, a signal for turning on the transistor SCS (H-level signal Sa) corresponds to an "instruction signal", and a signal for turning off the transistor SCS (L-level signal Sa) corresponds to a "stop signal". The output circuit 50 in the present embodiment includes the current source 52 and the transistor SCS, but is not limited thereto. For example, as the output circuit 50, a current mirror circuit that generates a current (constant current) on the basis of the H-level signal Sa and stops generating a current on the basis of the L-level signal Sa may be used.

The transfer circuit 60 transfers the charges on the wiring line L1 to each of the signal readout units RU1 to RU4 (more specifically, the charge storage units CS1 to CS4). The transfer circuit 60 includes four transistors (transfer transistors G1 to G4) connected in parallel to the wiring line L1. The transfer transistor G1 is connected to the charge storage unit CS1 of the signal readout unit RU1, and when the transfer transistor G1 is turned on, the transfer transistor G1 transfers the charges on the wiring line L1 to the charge storage unit CS 1. Similarly, the transfer transistors G2 to G4 are connected to the charge storage units CS2 to CS4, respectively, and transfer the charges on the wiring line L1 to the charge storage units CS2 to CS4.

Here, the charges on the wiring line L1 are charges from the current source 52 when the transistor SCS is turned on and the transistor SPD is turned off. In addition, when the transistor SCS is turned off and the transistor SPD is turned on, the charges are charges from the light receiving element D1. The control unit 30 performs control so that the transfer transistors G1 to G4 and the transistors SCS, SPD, and PDR are turned on or off.

The signal readout unit RU1 includes a charge storage unit CS1, a reset transistor RT1, a source follower transistor SF1, and a select transistor SL1.

The charge storage unit CS1 is formed by a storage capacitor C1 (capacitor) for storing charges from the wiring line L1, and is generally referred to as a floating diffusion (FD). During measurement by indirect ToF, charges are repeatedly stored in the charge storage unit CS1 in accordance with the number of repetitions n. The charges stored in the charge storage unit CS1 correspond to the amount of exposure to which the light receiving element D1 is exposed during the corresponding exposure period. In the present embodiment, the charge storage unit CS1 (floating diffusion FD1) is constituted using the storage capacitor C1, but a configuration without the storage capacitor C1 (capacitor), for example, a configuration with only parasitic capacitance may be adopted.

The reset transistor RT1 is an element (transistor) for discharging charges stored in the charge storage unit CS1, that is, resetting the charges to a reset voltage VRT. The source follower transistor SF1 and the select transistor SL1 read out the charges stored in the charge storage unit CS1 (output the charges to the signal conversion section SO1) on the basis of a selection signal (row selection signal) applied to a gate of the select transistor SL1. Each of the signal readout sections RU2 to RU4 has the same configuration as that of the signal readout section RU1, and thus the description thereof is omitted.

The signal conversion unit SO1 outputs a signal value corresponding to the charges stored in the charge storage unit CS1 by selecting the select transistor SL1 of the signal readout unit RU1. As shown in FIG. 2, the signal conversion unit SO1 includes an amplifier circuit ZF1 that amplifies the output of the signal readout unit RU1, and an A/D conversion circuit HK1 that converts an analog signal output from the amplifier circuit ZF1 into a digital signal. The signal conversion unit SO1 then converts the charges stored in the charge storage unit CS1 (the amount of exposure during the exposure period) into a signal value (digital signal) corresponding to the charges and outputs the signal value to the image acquisition unit 34 of the control unit 30. The signal value (digital signal) based on the charges stored in the charge storage unit CS1 is a signal value corresponding to the amount of exposure during the exposure period. Each of the signal conversion units SO2 to SO4 has the same configuration as that of the signal conversion unit SO1, and thus the description thereof is omitted.

By using such a 4-tap imaging sensor 22, it is possible to measure four regions through one imaging (described later). That is, four range images are obtained through one imaging. The number of range images (four in this case) obtained through one imaging may be referred to as "subframes". In addition, the plurality of regions (four in this case) measured through one imaging may be referred to as a "zone".

Incidentally, in the case of the multi-tap imaging sensor 22, variations may occur in the distribution characteristics between the taps due to the characteristics of the transfer circuit 60 (transfer transistors G1 to G4) and the charge storage units CS, and the like. In the measuring device 1 according to the present embodiment, it is possible to perform calibration using the output circuit 50 before the actual measurement.

<<Regarding calibration>>

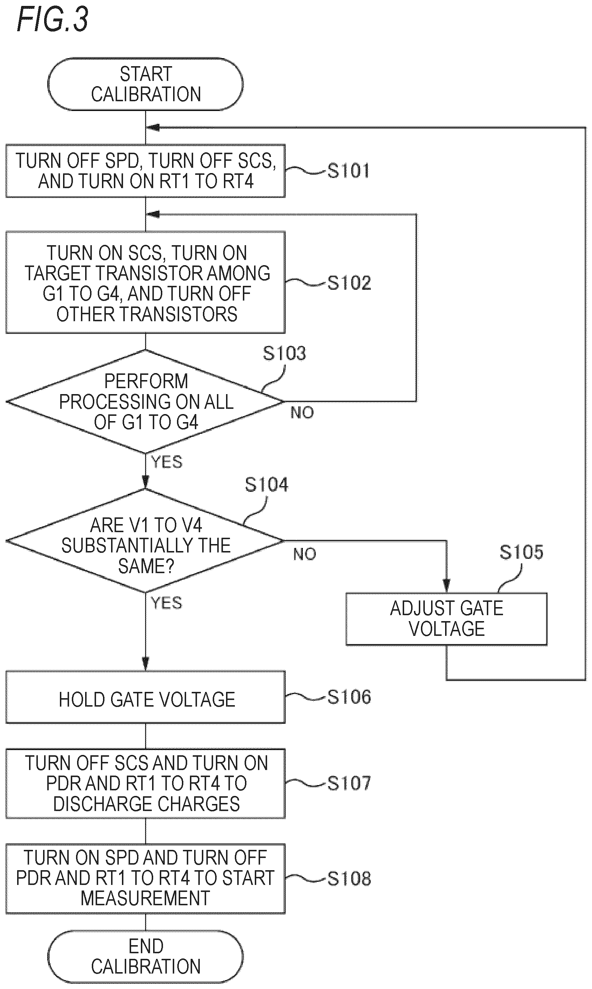

FIG. 3 is a flow diagram showing calibration. In the present embodiment, the control unit 30 (in this example, the correction unit 31) performs the calibration by controlling the turn-on/turn-off of each transistor (transistors SCS, SPD, and the like) of the pixel 221 of the imaging sensor 22.

First, the correction unit 31 turns off the transistors SPD and SCS, and turns on the reset transistors RT1 to RT4 (S101). Thereby, the light receiving element D1 and the current source 52 are disconnected from the wiring line L1, and the charges in the charge storage units CS1 to CS4 (floating diffusions FD1 to FD4) are reset.

Next, the correction unit 31 outputs an H-level signal Sa indicating calibration to turn on the transistor SCS. Furthermore, the correction unit 31 applies a predetermined voltage to a target transistor among the transfer transistors G1 to G4 of the transfer circuit 60 to turn on the transistor for a predetermined period and turn off the other transistors (S102). Thereby, the charges of the current source 52 are transferred to the corresponding charge storage unit CS via the wiring line L1 and the target transistor.

When the process of step S102 has not been performed for all of the transfer transistors G1 to G4 (NO in S103), the processing returns to step S102, and the correction unit 31 switches the target transistor and performs the same processing. In this manner, a target transistor is sequentially switched to perform the process of step S102, and thus charges are stored in the charge storage units CS (charge storage units CS1 to CS4).

When the process of step S102 has been performed for all of the transfer transistors G1 to G4 (YES in S103), the correction unit 31 acquires signal values corresponding to the charges stored in the charge storage units CS (charge storage units CS1 to CS4). Then, the correction unit 31 determines whether the voltages (voltages V1 to V4) of the charge (capacitance) storage units CS1 to CS4 are substantially the same on the basis of the signal values (S104). The voltages V1 to V4 correspond to the charges (charges corresponding to turn-on periods) transferred from the current source 52 to the charge storage units CS1 to CS4 during the turn-on periods of the transfer transistors G1 to G4, respectively.

Here, "substantially the same" means that the voltages V1 to V4 fall in a predetermined range from a predetermined voltage Vref (a voltage determined in advance by the charges, the turn-on periods, and the capacitance), for example, in a range of $\pm$ 5% of the Vref level.

When the voltages V1 to V4 are not substantially the same (NO in S104), the control unit 30 adjusts gate voltages of the transfer transistors G1 to G4 (S105). For example, the control unit 30 increases the gate voltage of the transfer transistor G corresponding to the charge storage unit CS with a low voltage so that the other voltages match the largest voltage among the voltages V1 to V4. Then, the processing returns to step S102, and the control unit 30 performs calibration again.

In step S104, when the voltages V1 to V4 are substantially the same (YES in S104), the correction unit 31 stores the gate voltages of the transfer transistors G1 to G4 in a memory or the like (S106). Thereafter, when the actual measurement is performed, the control unit 30 uses these gate voltages, that is, applies them to the gates of the corresponding transfer transistors.

Next, the correction unit 31 sets the signal Sa to an L level to turn off the transistor SCS. Thereby, the current source 52 is disconnected from the wiring line L1. In addition, the correction unit 31 turns on the transistor PDR and the reset transistors RT1 to RT4. Thereby, the charges of the light receiving element D1 and the charge storage units CS1 to CS4 are discharged (S107). Thereafter, the control unit 30 (correction unit 31) turns on the transistor SPD and turns off the transistor PDR and the reset transistors RT1 to RT4 to start measurement (S108).

«Modification example»

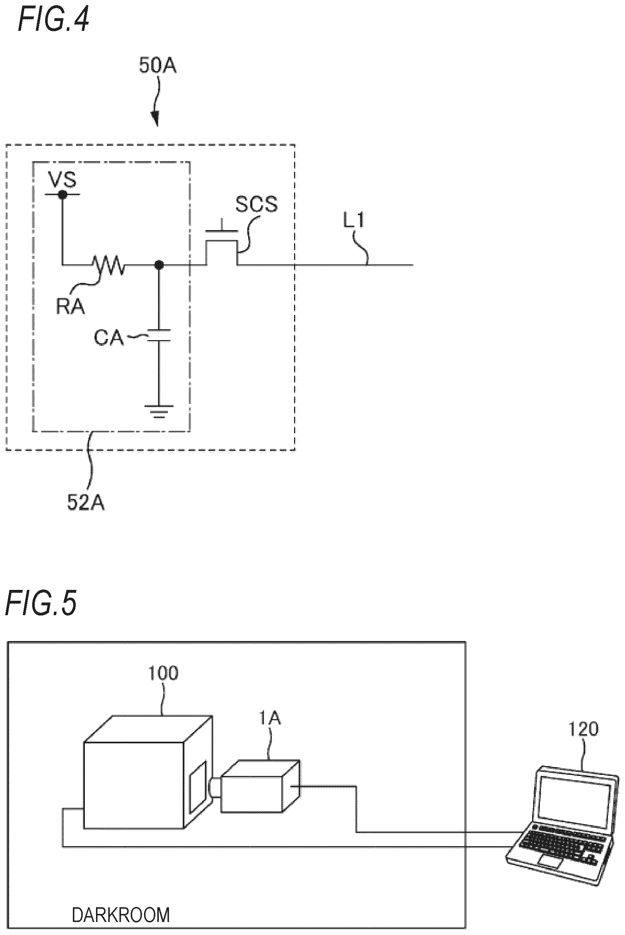

FIG. 4 is a diagram showing a modification example of an output circuit (output circuit 50A).

The output circuit 50A according to the modification example includes a current source 52A. The current source 52A includes a resistor R1 and a capacitor CA.

A certain voltage VS is applied to one end of the resistor R1. One terminal of the capacitor CA is connected to the other end of the resistor R1, and the other terminal is grounded. In addition, a transistor SCS is connected to a connection point (node) between the capacitor CA and the resistor R1.

The capacitance of the capacitor CA and the value of the voltage VS are set such that the charges of the current source 52A (capacitor CA) are not depleted due to the charges transferred to the corresponding charge storage unit CS during a period when each transfer transistor of the transfer circuit 60 is turned on.

Also in this modification example, the control of the turn-on/turn-off of the transistor SCS during calibration is the same as in the previous embodiment.

In this modification example, the output circuit 50A (current source 52A) can be configured simply without using a complex circuit.

<<Regarding effectiveness of present embodiment>>

FIG. 5 is a diagram showing a comparative example of correction of variations between taps.

A measuring device 1A according to this comparative example differs from the measuring device 1 of the present embodiment in that the imaging sensor 22 is not provided with an output circuit 50. In this comparative example, before the measuring device 1A is shipped from the factory, the imaging sensor 22 of the measuring device 1A is accommodated in a luminance box 100 with a designated illuminance as shown in FIG. 5. Then, the sensitivity of each tap (each charge storage unit CS) with respect to irradiation with a designated illuminance is measured by a control computer 120. The luminance box 100 irradiates the measuring device 1A (or the imaging sensor 22) with uniform light with a designated illuminance. A voltage applied to the gates of the transfer transistors G1 to G4 of the transfer circuit 60 is adjusted such that the sensitivity with respect to this illuminance is uniform for each tap.

In the case of this comparative example, dedicated equipment (brightness box 100 and control computer 120) is required. For this reason, there is a concern the efficiency of shipping tests may be reduced. Furthermore, it is not possible to correct variations between taps due to temperature changes or deterioration with time.

On the other hand, in the measurement device 1 of the present embodiment, calibration can be performed using the output circuit 50 (current source 52) provided in the imaging sensor 22, and thus so tap-to-tap variations can be easily corrected without using dedicated equipment (brightness box 100 and control computer 120).

<<Regarding measurement (indirect ToF)>>

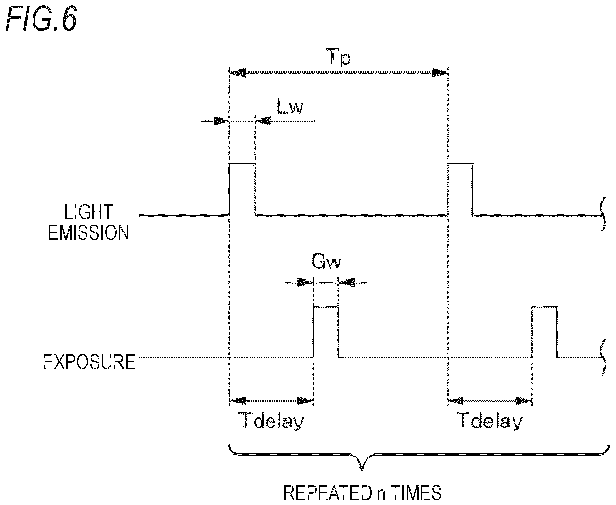

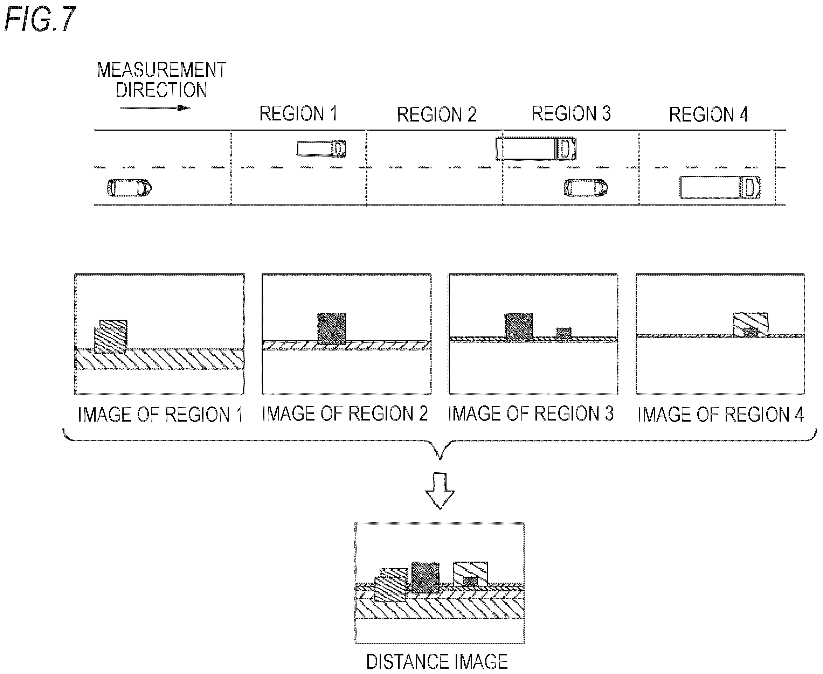

FIG. 6 is a diagram showing a light emission timing and an exposure timing. FIG. 7 is a diagram showing creation of a distance image by indirect ToF. As described above, during measurement, control is performed such that the transistor SPD is turned on and transistors SCS and PDR and reset transistors RT1 to RT4 are turned off.

First, as shown in FIG. 6, the control unit 30 (timing control unit 32) causes the light emitting unit 10 to emit a light emitting pulse. The width of the light emitting pulse (hereinafter, a pulse width) is Lw.

In addition, the control unit 30 (timing control unit 32) exposes reflected light to the imaging sensor 22 of the imaging unit 20 after a time Tdelay has elapsed since the emission of the light emitting pulse. An exposure period is set by the delay time Tdelay and an exposure width Gw. The exposure period is a period during which the level of exposure is a high level (H level).

The delay time Tdelay is a time from the emission of the light emitting pulse to the start of the exposure period. The delay time Tdelay is set in accordance with a distance to a region to be measured. That is, when a time from when the light emitting unit 10 emits the light emitting pulse to when exposure is performed by the imaging sensor 22 is set to be short, an image of an object in a region at a short distance can be acquired. The object is, for example, an object that reflects light. Conversely, when a time from when the light emitting unit 10 emits the light emitting pulse to when exposure is performed by the imaging sensor 22 is set to be long, an image of an object in a region at a long distance can be acquired.

The exposure width Gw is the width of the exposure period, that is, a period from the start of exposure to the end of exposure. The width of the exposure period specifies the length of a region to be measured in a measurement direction. Thus, the shorter the exposure width Gw, the higher a distance resolution.

In the present embodiment, as shown in FIG. 7, different exposure periods are set depending on a distance to a region to be measured. Although four regions are shown in FIG. 7 for simplicity, the number of regions N is not limited to four in reality.

Light emission and exposure are repeated a plurality of times at a cycle Tp shown in FIG. 6. This is for storage of charges in the imaging sensor 22. In addition, the farther a region to be measured, the larger the number of repetitions n is set. This is because reflected light becomes weaker the farther the region.

In an image obtained for each region, an object (object reflecting light) that exists in the region is shown. This image for each region may be referred to as a "range image". The value (image data) of each pixel constituting an image indicates a signal value corresponding to the amount of exposure.

As shown in FIG. 7, the measuring device 1 according to the present embodiment can acquire image data of a plurality of regions at different distances, and can acquire a distance image showing a distance to an object on the basis of the plurality of pieces of acquired image data. While the range image is an image obtained by cutting out a portion of the distance, an image obtained by combining these is a composite image of the whole distance. This whole-distance composite image corresponds to a typical captured image. On the other hand, distance information is calculated on the basis of pixel value information of the range image, and an image in which these are arranged for each pixel is a distance image. When these images are streamed one after another, they become a video, and the term "frame" is used to refer to a time axis at that time. For this reason, a "frame" in a ToF camera includes a whole-distance composite image and a distance image.

When only one region can be measured for one light emission, it takes time to acquire image data for a large number of regions, which results in a long measurement time, that is, it is difficult to increase FPS. Thus, in the present embodiment, a multi-tap (specifically, 4-tap) CMOS image sensor is used as the imaging sensor 22. Thereby, four exposure periods can be set for one light emission, and four regions can be measured. That is, four range images are obtained through one imaging. The number of range images (four in this case) obtained through one imaging may be referred to as "subframes". In addition, a plurality of regions (four regions in this case) measured through one imaging may be referred to as a "zone". However, the imaging sensor 22 is not limited to a 4-tap CMOS image sensor.

<Regarding image acquisition>

First, the control unit 30 (timing control unit 32) causes the light emitting unit 10 to emit light at a cycle Tp (see FIG. 6) and controls the exposure timing of the imaging unit 20 in accordance with the light emission timing. Then, the image acquisition unit 34 acquires an image (image data) captured by the imaging unit 20 at each exposure timing.

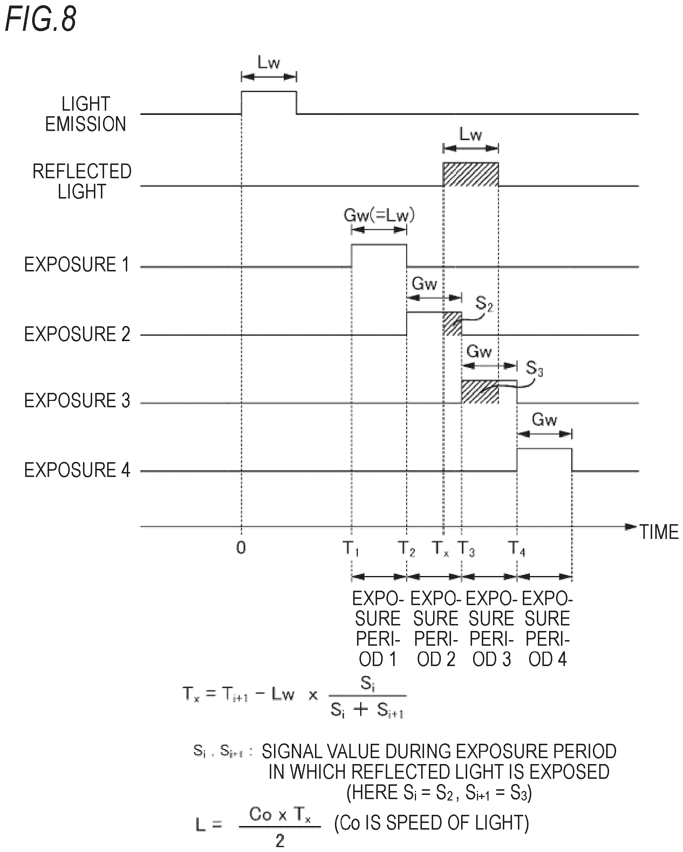

First, the control unit 30 acquires an image of a zone 1 (regions 1 to 4). That is, the timing control unit 32 causes the imaging sensor 22 of the imaging unit 20 to perform exposure for each pixel of the image during exposure periods 1 to 4 (see FIG. 8) delayed from the light emission timing.

The timing control unit 32 repeatedly performs exposure at each cycle Tp, and stores charges in the charge storage units CS1 to CS4.

The image acquisition unit 34 acquires signal values corresponding to charges stored in the charge storage units CS1 to CS4 via the signal conversion units SO1 to SO4. The control unit 30 then writes image data of the acquired range images (subframes) of the regions 1 to 4 to an image memory.

Next, similarly, the control unit 30 acquires an image of a zone 2 (regions 5 to 8). The control unit 30 then writes the image data of the range images (subframes) of the regions 5 to 8 to the image memory of the image acquisition unit 34. A delay time Tdelay for the light emission timing in the zone 2 (regions 5 to 8) is set to be longer than that of the zone 1 (regions 1 to 4). Also, as described above, the number of repetitions (the number of times charges are stored) is set to be larger as a region to be measured becomes farther. Although light emitting pulses (light emission timings) are separate in the regions 4 and 5, the exposure periods of the regions 4 and 5 are continuous when the light emitting pulse is used as a reference. In this manner, continuous exposure periods are not limited to those constituted by only exposure periods with the same light emission timing, but may also include exposure periods with different light emission timings.

By performing the above operations up to a region N, images up to the region N (images of all of the regions) are acquired.

<Regrading arrival time and distance>

FIG. 8 is a diagram showing a relationship between light emission and exposure in the case of four taps.

In FIG. 8, the pulse width of the light emitting pulse is Lw. In addition, the pulse width of reflected light is also Lw. In this example, exposures 1 to 4 are set. The width of each of the exposure periods (exposure widths) of the exposures 1 to 4 is the same as the pulse width Lw of the light emitting pulse. The exposure period is a period during which the level of exposure in FIG. 8 is a high level (H level). In addition, the H/L levels of the exposures 1 to 4 indicate turn-on/turn-off of the transfer transistors G1 to G4 in FIG. 2. For example, the transfer transistor G1 is turned on during the H-level exposure period 1 of the exposure 1, and charge generated by the light receiving element D1 are stored in the storage capacitor C1 of the charge storage unit CS1. At this time, the control unit 30 applies the gate voltage (gate voltage of the transfer transistor G1) held in step S106 in FIG. 3 to the gate of the transfer transistor G1. Similarly, for the exposure periods 2 to 4, the control unit 30 applies the gate voltage held in step S106 to the gates of the transfer transistors G2 to G4, respectively. Thereby, it is possible to correct variations between the taps.

Here, a case where reflected light is exposed in the exposure period 2 and the exposure period 3 is described. The reflected light may arrive in a period different from the exposure period 2 and the exposure period 3, and for example, the reflected light may be exposed in the exposure period 1 and the exposure period 2.

In the exposure 1, a region (region 1) designated by the delay time T1 from the start of the light emission of the light emitting pulse and the exposure width Gw (= Lw) is measured. In this example, the reflected light is not exposed in the exposure period 1, and thus no charges are stored in the charge storage unit CS1 of the pixel 221 of the imaging sensor 22. That is, a signal value $S_1$ acquired in the exposure period 1 is zero.

In addition, the exposure period 2 corresponding to a region (region 2) next to the region 1 is set for the exposure 2. The pixel 221 of the imaging sensor 22 acquires a signal value $S_2$ corresponding to the amount of exposure of the reflected light in the exposure period 2.

Further, the exposure period 3 corresponding to a region (region 3) next to the region 2 is set for the exposure 3. The pixel 221 of the imaging sensor 22 acquires a signal value $S_3$ corresponding to the amount of exposure of the reflected light in the exposure period 3.

In addition, the exposure period 4 corresponding to a region (region 4) next to the region 3 is set for the exposure 4. In this example, reflected light is not exposed in the exposure period 4, and thus no charges are stored in the charge storage unit CS4 of the pixel 221 of the imaging sensor 22. That is, a signal value $S_4$ acquired in the exposure period 4 is zero.

In FIG. 8, for the sake of description, the description is given on the basis of charges in one exposure, but in reality, signal values $S_i$ (here, $S_1$ to $S_4$) become signal values corresponding to charges (corresponding to the amount of exposure) stored by repeating the exposure by the number of repetitions n. The signal conversion units SO1 to SO4 of the pixels 221 of the imaging sensor 22 output the signal values $S_1$ to $S_4$ corresponding to the charges stored in the charge storage units CS1 to CS4. The signal values $S_1$ to $S_4$ correspond to the values of pixels (pixel data) that constitute the image data of the images (range images) of the regions 1 to 4, respectively.

The image acquisition unit 34 of the control unit 30 acquires the signal values $S_1$ to $S_4$ (signal values corresponding to the charges in the charge storage units CS1 to CS4) of the pixels 221 from the imaging sensor 22. Thereby, the image acquisition unit 34 acquires the image data of the regions 1 to 4. Similarly, the image acquisition unit 34 acquires images up to the region N (images of all regions).

The time calculation unit 36 of the control unit 30 calculates an arrival time Tx of reflected light. Specifically, first, the time calculation unit 36 specifies a signal value S of exposure of the reflected light from among the signal values $S_1$ to $S_4$ (signal values $S_1$ to $S_N$). For example, the time calculation unit 36 specifies a signal value with the largest amount of exposure which is a signal corresponding to two consecutive exposure periods. For example, when a signal value corresponding to an exposure period i in which the exposure of the reflected light is started is set to be $S_i$, two signal values $S_i$ and $S_{i+1}$ are specified. Here, signal values $S_2$ and $S_3$ correspond to the signal values $S_i$ and $S_{i+1}$ of the exposure of the reflected light.

The time calculation unit 36 calculates a flight time of light (hereinafter also referred to as an arrival time) Tx according to the following Formula (1) by using the signal values $S_i$ and $S_{i+1}$.

$$Tx = T_{i+1} - Lw \times S_i / (S_i + S_{i+1})\ldots(1)$$

When a distance to an object is assumed to be L, the distance L to the object is calculated on the basis of the arrival time Tx. That is, since light travels twice the distance L during the arrival time Tx, when the speed of light is assumed to be Co, the following formula is obtained.

$$L = (Co \times Tx) / 2\ldots(2)$$

The distance calculation unit 38 calculates the distance L to the object by Formula (2).

(Conclusion)

The imaging sensor 22 and the measuring device 1 according to the present embodiment have been described above. The imaging sensor 22 includes the light receiving element D1, the output circuit 50, four charge storage units CS1 to CS4, and the transfer circuit 60. The light receiving element D1 outputs charges corresponding to the amount of exposure to the wiring line L1. When the output circuit 50 receives an input of a signal (H-level signal Sa) for instructing calibration from the control unit 30, the output circuit 50 outputs charges corresponding to a period during which the signal is input to the wiring line L1. The transfer circuit 60 transfers the charges output to the wiring line L1 to each of the four charge storage units CS1 to CS4. Thereby, it is possible to output charges (current) for calibration from the output circuit 50, and thus variations can be corrected without using dedicated equipment.

The output circuit 50 also includes the current source 52 and the transistor SCS. The transistor SCS is provided between the current source 52 and the wiring line L1, and is turned on based on a command signal from the control unit 30 and turned off based on a stop signal. Thereby, it is possible to control the supply of charges (current) from the current source 52 to the wiring line L1.

In addition, the current source 52A of the output circuit 50A according to the modification example includes the resistor R1 having one end to which a voltage VS is applied, and the capacitor CA connected to the other end of the resistor R1. The transistor SCS is connected to a node N1 to which the resistor R1 and the capacitor CA are connected. Thereby, it is possible to more simply configure the output circuit.

In addition, the imaging sensor 22 includes the transistor SPD provided between the light receiving element D1 and the wiring line L1. Thereby, it is possible to perform calibration at a desired timing.

The imaging sensor 22 also includes the transistor PDR connected in parallel to the light receiving element D 1. Thereby, it is possible to discharge charges of the light receiving element D1.

The measuring device 1 also includes the imaging sensor 22 and the control unit 30 that controls the transfer circuit 60. The transfer circuit 60 includes the transfer transistors G1 to G4 that are connected to the charge storage units CS1 to CS4, respectively, and the control unit 30 controls the turn-on/turn-off of each of the transfer transistors G1 to G4. Thereby, it is possible to perform calibration so that the charges (voltages) stored in the charge storage units CS1 to CS4 are substantially equal to each other.

The above-described embodiment is intended to facilitate the understanding of the invention and is not intended to constrain and interpret the invention. Furthermore, the invention may be modified or improved without departing from the spirit thereof, and it is needless to say that the invention includes equivalents thereof.

This application is based on Japanese Patent Application No. 2022-38375, filed on March 11, 2022, the contents of which are incorporated herein by reference.

**Claims**

1. A photoelectric conversion circuit comprising:

   a light receiving element that outputs charges corresponding to an amount of exposure to a predetermined wiring line;
   an output circuit that, when an instruction signal is input, outputs charges corresponding to a period during which the instruction signal is input to the predetermined wiring line;

a plurality of charge storage units; and
a transfer circuit that transfers the charges output to the predetermined wiring line to each of the plurality of charge storage units.

2. The photoelectric conversion circuit according to claim 1, wherein

the output circuit includes
a current source, and
a first switch that is provided between the current source and the predetermined wiring line and that is turned on based on the instruction signal and turned off based on a stop signal.

3. The photoelectric conversion circuit according to claim 2, wherein

the current source includes
a resistor that has one end to which a predetermined voltage is applied, and
a capacitor that is connected to the other end of the resistor, and
the first switch is connected to a node to which the resistor and the capacitor are connected.

4. The photoelectric conversion circuit according to any one of claims 1 to 3, further comprising a second switch that is provided between the light receiving element and the predetermined wiring line.

5. The photoelectric conversion circuit according to any one of claims 1 to 4, further comprising a third switch that is connected in parallel to the light receiving element.

6. A photoelectric conversion device comprising:

the photoelectric conversion circuit according to any one of claims 1 to 5; and
a control unit that controls the transfer circuit, wherein
the transfer circuit includes a plurality of transistors that are connected to each of the plurality of charge storage units, and
the control unit controls each of the plurality of transistors.

## FIG.1

30

CONTROL UNIT

| CORRECTION UNIT | —31 |

| TIMING CONTROL UNIT | —32 |

| IMAGE ACQUISITION UNIT | —34 |

| TIME CALCULATION UNIT | —36 |

| DISTANCE CALCULATION UNIT | —38 |

1

10

MEASUREMENT DIRECTION →

LIGHT EMITTING UNIT

| LIGHT SOURCE | —12 |

IMAGING UNIT

| IMAGING SENSOR | —22 |

20

FIG.2

## FIG.3

```
        ┌──────────────────┐
        │     START        │
        │  CALIBRATION     │
        └────────┬─────────┘
                 │
        ┌────────▼─────────────────┐
        │ TURN OFF SPD, TURN OFF SCS,│─── S101
        │  AND TURN ON RT1 TO RT4   │
        └────────┬─────────────────┘
                 │
        ┌────────▼─────────────────┐
        │    TURN ON SCS, TURN ON   │
        │ TARGET TRANSISTOR AMONG   │─── S102
        │   G1 TO G4, AND TURN OFF  │
        │     OTHER TRANSISTORS     │
        └────────┬─────────────────┘
                 │                     S103
           ┌─────▼──────┐
           │  PERFORM   │
           │PROCESSING ON ALL│── NO ──┐
           │  OF G1 TO G4   │         │
           └─────┬──────┘             │
              YES│                    │
                 │                S104 │
           ┌─────▼──────┐
           │ ARE V1 TO V4│
           │SUBSTANTIALLY THE│── NO ──┐    S105
           │    SAME?    │        ┌───▼──────────┐
           └─────┬──────┘        │ ADJUST GATE   │
              YES│               │   VOLTAGE     │
                 │               └──────────────┘
        ┌────────▼─────────┐
        │ HOLD GATE VOLTAGE │─── S106
        └────────┬─────────┘
                 │
        ┌────────▼─────────────────┐
        │  TURN OFF SCS AND TURN ON │
        │   PDR AND RT1 TO RT4 TO   │─── S107
        │    DISCHARGE CHARGES      │
        └────────┬─────────────────┘
                 │
        ┌────────▼─────────────────┐
        │  TURN ON SPD AND TURN OFF │
        │ PDR AND RT1 TO RT4 TO START│─── S108
        │      MEASUREMENT          │
        └────────┬─────────────────┘
                 │
        ┌────────▼─────────┐
        │      END         │
        │  CALIBRATION     │
        └──────────────────┘
```

*FIG.4*

50A

VS

SCS

L1

RA

CA

52A

*FIG.5*

100

1A

120

DARKROOM

# FIG.6

LIGHT EMISSION

EXPOSURE

REPEATED n TIMES

# FIG.7

MEASUREMENT
DIRECTION

| REGION 1 | REGION 2 | REGION 3 | REGION 4 |

IMAGE OF REGION 1    IMAGE OF REGION 2    IMAGE OF REGION 3    IMAGE OF REGION 4

DISTANCE IMAGE

*FIG.8*

$$T_x = T_{i+1} - Lw \times \frac{S_i}{S_i + S_{i+1}}$$

$S_i$, $S_{i+1}$ : SIGNAL VALUE DURING EXPOSURE PERIOD
IN WHICH REFLECTED LIGHT IS EXPOSED
(HERE $S_i = S_2$, $S_{i+1} = S_3$)

$$L = \frac{Co \times T_x}{2} \quad (Co \text{ IS SPEED OF LIGHT})$$

**EP 4 492 811 A1**

<table>
<tr><td colspan="2" align="center"><strong>INTERNATIONAL SEARCH REPORT</strong></td><td colspan="2">International application No.<br><br><strong>PCT/JP2023/006026</strong></td></tr>
</table>

| | |
|---|---|
| **A.** | **CLASSIFICATION OF SUBJECT MATTER** |

*H04N 25/77*(2023.01)i; *G01S 17/894*(2020.01)i
FI: H04N25/77; G01S17/894

According to International Patent Classification (IPC) or to both national classification and IPC

| | |
|---|---|
| **B.** | **FIELDS SEARCHED** |

Minimum documentation searched (classification system followed by classification symbols)

H04N25/77; G01S17/894

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2021/020496 A1 (BROOKMAN TECHNOLOGY, INC.) 04 February 2021 (2021-02-04) paragraphs [0022]-[0035], [0043]-[0051], fig. 1, 3 | 1, 4-6 |
| Y | paragraphs [0022]-[0035], [0043]-[0051], fig. 1, 3 | 2-3 |
| Y | WO 2020/153261 A1 (SONY SEMICONDUCTOR SOLUTIONS CORP) 30 July 2020 (2020-07-30) paragraphs [0034]-[0037], fig. 5 | 2-3 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/006026**

| Patent document cited in search report | | | Publication date (day/month/year) | Patent family member(s) | | | Publication date (day/month/year) |
|---|---|---|---|---|---|---|---|
| WO | 2021/020496 | A1 | 04 February 2021 | US | 2022/0146684 | A1 | |
| | | | | paragraphs [0042]-[0055], [0063]-[0071], fig. 1, 3 | | | |
| | | | | EP | 4009073 | A1 | |
| | | | | CN | 114175618 | A | |
| | | | | TW | 202112122 | A | |
| | | | | JP | 2021-25833 | A | |
| WO | 2020/153261 | A1 | 30 July 2020 | US | 2022/0050178 | A1 | |
| | | | | paragraphs [0057]-[0060], fig. 5 | | | |
| | | | | EP | 3916350 | A1 | |
| | | | | CN | 113302448 | A | |
| | | | | TW | 202040160 | A | |

Form PCT/ISA/210 (patent family annex) (January 2015)

**EP 4 492 811 A1**

**Patent documents cited in the description**

- JP 2021025833 A
- JP 2022038375 A